(19) Europäisches Patentamt
European Patent Office
Office européen des brevets

(11) **EP 3 685 984 B1**

(12) **EUROPÄISCHE PATENTSCHRIFT**

(45) Veröffentlichungstag und Bekanntmachung des Hinweises auf die Patenterteilung:
**05.03.2025   Patentblatt 2025/10**

(21) Anmeldenummer: **20152370.1**

(22) Anmeldetag: **17.01.2020**

(51) Internationale Patentklassifikation (IPC):
*B29C 48/92* (2019.01)   *B29C 48/355* (2019.01)
*B29C 48/12* (2019.01)   *B29C 48/25* (2019.01)
*B29C 48/11* (2019.01)   *B23D 25/04* (2006.01)
*B29C 48/90* (2019.01)   *B23D 45/20* (2006.01)
*B26D 1/08* (2006.01)   *B26D 1/60* (2006.01)
*B26D 5/20* (2006.01)

(52) Gemeinsame Patentklassifikation (CPC):
**B29C 48/0022; B26D 1/08; B26D 1/60; B26D 3/16; B26D 5/00; B26D 5/20; B26D 7/2628; B29C 48/12; B29C 48/2528; B29C 48/355; B29C 48/902; B29C 48/903; B29C 48/92;** B29C 48/11; B29C 2948/9258;                    (Forts.)

(54) **VERFAHREN UND VORRICHTUNG ZUR ABTRENNUNG VON PROFILABSCHNITTEN**

METHOD AND DEVICE FOR SEPARATING PROFILED SECTIONS

PROCÉDÉ ET DISPOSITIF DE SÉPARATION DE SECTIONS DE PROFILÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.01.2019   AT 600152019**

(43) Veröffentlichungstag der Anmeldung:
**29.07.2020   Patentblatt 2020/31**

(73) Patentinhaber: **extrunet GmbH**
**4653 Eberstalzell (AT)**

(72) Erfinder:
• **GRUBER, Dietmar**
**4553 Schlierbach (AT)**
• **STADLHUBER, Thomas**
**4810 Gmunden (AT)**

(74) Vertreter: **Babeluk Patentanwälte GmbH**
**Florianigasse 26/3**
**1080 Wien (AT)**

(56) Entgegenhaltungen:
**EP-A1- 2 487 012   EP-A1- 2 628 392**
**EP-A2- 1 955 798   WO-A1-2005/087420**
**WO-A1-2018/073679   WO-A1-2018/219477**
**CN-A- 105 665 817   DE-U1- 20 209 810**
**US-A1- 2014 083 271**

(52) Gemeinsame Patentklassifikation (CPC): (Forts.)
B29C 2948/92933

# EP 3 685 984 B1

## Beschreibung

Die Erfindung betrifft ein Verfahren zur Abtrennung von Profilabschnitten in Extrusionslinien gemäß dem Oberbegriff von Patentanspruch1 und eine Vorrichtung gemäß dem Oberbegriff von Patentanspruch 7.

Insbesondere betrifft die Erfindung ein Verfahren, bei dem während des laufenden Extrusionsprozesses ein Schlitten in einer stromaufwärtigen Stellung mit dem kalibrierten Profilstrang gekoppelt wird, um sich mit dem Profilstrang mitzubewegen, wobei in dem gekoppelten Zustand ein Messer im Schlitten aus einem Anfangszustand quer zur Extrusionsrichtung in einen Endzustand bewegt wird, um einen Profilabschnitt vom Profilstrang abzutrennen, danach das Messer in den Anfangszustand zurückbewegt wird, wonach der Schlitten vom Profilstrang abgekoppelt wird und wieder den stromaufwärtigen Zustand zurückbewegt wird.

Dies ist somit ein Verfahren, bei dem ein Cutter verwendet wird. Unter einem "Cutter" versteht man in der Extrusionstechnologie, speziell beim Extrudieren von Fensterprofilen, eine Maschine zum Ablängen von Profilen, mit der mittels eines Messers aus dem endlos gefertigten Profilstrang die einzelnen Profilstangen, üblicherweise mit einer Länge von 6 m, spanlos abgetrennt werden. Cutter verdrängen zunehmend die Ablängsägen, welche seit jeher für das Ablängen eingesetzt wurden.

Die eigentliche Schneidvorrichtung, im Folgenden Cuttervorrichtung genannt, umfasst eine stabile, geteilte Profilauflage mit einer Klemmvorrichtung für das Profil und ein senkrecht dazu verschiebbares Messer. Letzteres ist im Mittelbereich eines vertikal verschiebbaren Spannrahmens eingespannt, wobei eine erhebliche Zug-Vorspannung vorliegen muss. Die Schneide des Messers weist etwa einen Winkel von 30° zur Auflage des Profils auf. Üblicherweise erfolgt der Schnitthub von oben nach unten, so dass der Spannrahmen mit dem Messer in vertikal angeordneten Axialführungen gelagert ist, welche eine Verschiebung relativ zur Profilauflage erlauben. Beim Trennvorgang wird das schräg stehende Messer durch Verschieben des Spannrahmens vertikal durch das Profil gedrückt. Der Antrieb für den Schnitthub und das erforderliche Zurückschieben in die Ausgangslage erfolgt meistens durch einen Spindel- oder Zahnstangenantrieb mit Elektromotor oder durch einen Exzenterantrieb. Früher wurden auch Pneumatik- oder Hydraulikzylinder hierfür eingesetzt.

Da sich beim Extrudieren das abzulängende Profil in Extrusionsrichtung bewegt, muss sich während des Trennvorganges die oben beschriebene Cuttervorrichtung synchron mit dem Profil mitbewegen. Daher wird die Cuttervorrichtung auf einem verfahrbaren Schlitten montiert, welcher beim Trennvorgang synchron mit dem Profil in Extrusionsrichtung verfährt und anschließend wieder in die Ausgangslage bzw. Warteposition zurück verschoben wird.

Die Länge des Messers und dessen Winkel zur Auflagefläche, die Geometrie des Spannrahmens und der maximale Schnitthub begrenzen das "Schnittfenster", welches die Extremmaße des zu schneidenden Profils definiert. Schmale Profile können infolge der Neigung des Messers somit höher sein als breite Profile.

Dem Schnittwinkel, also dem Winkel zwischen der Schneide und der Bewegungsrichtung des Messers, sowie dem Winkel zwischen Schneide und der aktuell zu schneidenden Profilwand, kommt eine besondere Bedeutung in Hinblick auf die auftretende Schnittkraft und die Qualität der Stirnfläche des abgetrennten Profils zu. Weitere wichtige Einflussfaktoren auf die Schnittqualität sind die Geometrie des Messers (Länge, Dicke, Schneidenwinkel u. dgl.), die Temperatur des Messers, die Schnittgeschwindigkeit, die maximal erlaubte Zyklusdauer usw.

Ein Cutter erfüllt seine Aufgabe umso besser, je flexibler er an eine konkrete Schnittaufgabe, also an ein bestimmtes Profil, dessen Geometrie und Orientierung, angepasst werden kann. Hinsichtlich Flexibilität sind die bisher eingesetzten Cutter als sehr bescheiden zu beurteilen. Über eine elektronisch vorgebbare Einstellung der oberen Warteposition, der Begrenzung des Hubes nach unten unmittelbar nach dem vollständigen Durchtrennen des Profils und der Vorgabe einer einheitlichen Vorschubgeschwindigkeit des Messers in beide Richtungen (Geschwindigkeit für Arbeitshub und Geschwindigkeit für Rückhub) ist man noch nicht hinausgekommen.

Die Hauptvorteile eines Cutters im Vergleich zu einer Säge sind:

- Kein Materialverlust infolge der Sägeblattdicke;

- Keine Staubentwicklung und kein Anhaften von Sägespänen an den Profilen;

- Sehr geringer Lärmpegel.

Die Hauptnachteile eines Cutters im Vergleich zu Sägen sind:

- Begrenzte Stabilität des Messers - Einsatzgrenze bei größeren Wanddicken und Materialanhäufungen;

- Wenig Flexibilität der Einstellparameter bei ausgefallenen Profilquerschnitten;

- Qualität der Schnittfläche (Ebenheit, Gradbildung u.a.) nicht bei allen Profilquerschnitten gewährleistet.

Zielsetzung der Erfindung ist, den Cutter so zu gestalten, dass er mit wenig Aufwand an unterschiedliche Schneidaufgaben angepasst werden kann, so dass die optimal erreichbare Schnittqualität gewährleistet wird, und dass die einmal aufgefunden Einstellparameter bei jedem Fertigungslos des betreffenden Profils einfach reproduzierbar eingestellt werden können. Diese Zielsetzung wird mit einem vollständig ausgestatteten Cutter gemäß der folgenden Beschreibung am besten erfüllt. Es wird jedoch darauf hingewiesen, dass einzelne Aspekte der Erfindung auch mit weniger vollständig ausgestatteten Cuttern ausgeführt werden können, welche nach Maßgabe der Patentansprüche ausdrücklich auch in den Schutzumfang dieser Erfindung fallen.

Aus der WO 2018/219477 A ist eine Säge bekannt, die zum Abtrennen von Profilabschnitten ausgebildet ist. Somit sind die oben angeführten Nachteile von Sägen auch hier verwirklicht.

Die WO 2005/087420 A beschreibt eine Abtrennvorrichtung, bei der wahlweise ein Messer oder eine Säge eingesetzt werden kann. Aufgrund der begrenzten Geschwindigkeit, mit der das Messer durch das Profil bewegt werden kann, ist abhängig von der Extrusionsgeschwindigkeit ein sehr großer Verschiebeweg erforderlich, so dass die Extrusionslinie eine große Länge aufweisen muss.

Aufgabe dieser Erfindung ist es diese Nachteile zu vermeiden und eine Lösung anzugeben, die funktionssicher ist und möglichst wenig Platz in Extrusionsrichtung benötigt.

Diese Aufgaben werden durch die Merkmale von Patentanspruch 1 gelöst.

Die Beschreibung des Cutters aus konstruktiver Sicht erfolgt aus Gründen der Verständlichkeit mit Begriffen wie horizontal, vertikal, oben, unten etc. Bei einem Cutter nach dem Stand der Technik, siehe oben, bewegt sich also das Messer beim Trennvorgang vertikal von oben nach unten. Wird dieser Cutter um die Extrusionsachse gekippt, was vorteilhaft bei einem breiten, flach aufliegenden Profil ist, so bewegt sich dann das Messer beim Trennvorgang horizontal von hinten nach vorne. In der Funktion sind die beiden Cutter, der ursprüngliche und der gekippte, gleich, so dass das Kippen kaum eine erfinderische Tätigkeit begründet. Im Folgenden wird der erfindungsgemäße Cutter nur in der bevorzugten Orientierung beschrieben. Wird, aus welchen Gründen auch immer, eine andere Orientierung gewählt, so trifft diese Beschreibung sinngemäß auch auf derartige, anders orientierte Cutter zu.

Die Vorgänge aus physikalischer Sicht beim Schneiden sind zweckmäßigerweise am besten anhand der Bewegung des Messers relativ zum Profil beschreibbar. Für diesen Zweck bieten sich die Begriffe "in Schnittebene", "Richtung der Schneide", "Richtung senkrecht zur Schneide", "Winkel zwischen Schneide und Bewegungsrichtung des Messers", "Winkel zwischen Schneide und Profilwand" u.a., an. Diese Begriffe werden benötigt, um die Abgrenzung dieser Erfindung zum Stand der Technik zu verdeutlichen.

Folgendes Verfahren wird beim Schneiden mit einem Cutter nach dem Stand der Technik typischerweise ausgeführt:
Ein Messer, welches gegenüber der Bewegungsrichtung einen Neigungswinkel von näherungsweise 60° aufweist, wird mit einer bestimmten Geschwindigkeit senkrecht durch das Profil gedrückt. Zunächst durchdringt die Schneide nur eine Längskante des Profils, die aktuelle Schnittlänge ist sehr kurz. Mit zunehmender Eindringtiefe wird die aktuelle Schnittlänge immer länger, je nachdem wie viele Profilwände mit bestimmten Dicken erfasst werden. Mit fortschreitender Eindringtiefe kann sich auch die aktuelle Schnittlänge verkürzen, wenn die Querschnittsform des Profils entsprechend gestaltet ist.

Wesentlich aus physikalischer Sicht ist dabei:
Die Bewegungsgeschwindigkeit $v_0$ des Messers weist relativ zum Profil Hauptkomponenten auf:

- Bewegungskomponente senkrecht zur Schneide. Diese errechnet sich bei einer Neigung des Messers von 60° mit:

$$v_1 = v_0 \times 0{,}866.$$

- Bewegungskomponente in Richtung der Schneide. Diese errechnet sich bei der angegebenen Neigung mit:

$$v_2 = v_0 \times 0{,}5.$$

Diese beiden Geschwindigkeitskomponenten $v_1$ und $v_2$ verursachen Reaktionskräfte, welche das Messer erheblich belasten und gegebenenfalls dessen Bruch verursachen.

Zur Veranschaulichung ein Vergleich mit einem Schneidvorgang unter Verwendung eines Küchenmessers:

- Schneiden von Gemüse: Das Gemüse verursacht nur geringe Reaktionskräfte. Die Kraft, zum Drücken des Messers nach unten, liegt in der gleichen Größenordnung wie die Kraft, die zum Verschieben des Messers in Längsrichtung erforderlich ist. Das Messer gleitet in einem schrägen Winkel durch das Gemüse und der Trennvorgang ist "auf kurzem Wege", hier wörtlich zu nehmen, erledigt. Diese Schnittbewegung wird häufig als "drückender Schnitt" bezeichnet.

- Schneiden von Speck: Der Speck setzt dem Eindringen des Messers nach unten eine große Kraft entgegen, hingegen ist die Kraft zum Verschieben des Messers in Längsrichtung relativ gering. Das Messer kann nicht aus dem Handgelenk vertikal oder schräg durch den Speck gedrückt werden. Dieses wird daher mehrmals hin- und hergeschoben und durchschneidet auf diese Weise mit relativ geringem Kraftaufwand den Speck. Diese Schnittbewegung wird häufig als "ziehender Schnitt" bezeichnet.

Das Schneiden mit einem herkömmlichen Cutter entspricht etwa dem Schneiden von Gemüse, allerdings setzt das Profil dabei der senkrechten Bewegung des Messers eine vergleichsweise große Kraft entgegen, die Kraftkomponente senkrecht zur Schneide beträgt das 0,866-fache der über den Halterahmen auf das Messer aufgebrachten Antriebskraft. Die in Richtung der Schneide wirkende Kraftkomponente ist geringer und beträgt das 0,5-fache der Antriebskraft.

Diese Kraftkomponenten belasten das Messer in unterschiedlicher Weise und beschränken den Einsatzbereich von Cuttern. Derzeit eingesetzte Cutter haben hinsichtlich der Bewegung des Messers keine Freiheitsgrade, welche durch Verändern von diversen, digital einstellbaren Parametern beeinflusst werden könnten, ausgenommen die Vorschubgeschwindigkeit.

Es werden nun die erfindungsgemäßen und die optionalen Merkmale der Patentansprüche näher erläutert. Folgende Maßnahmen im Sinne dieser Erfindung sind als Erweiterung der Funktionalität von herkömmlichen Cuttern zu sehen:

<u>Maßnahme</u> A: Digital vorgebbare Endlagen bzw. Wartepositionen des Messers und variable Schnittgeschwindigkeit:

Die Wartepositionen des Messers werden bis auf wenige Millimeter an die Profilgeometrie angepasst, so dass infolge kurzer Hublängen die Zykluszeit verringert wird. Die Vorschubgeschwindigkeit wird so an die Profilgeometrie angepasst, dass eine optimale Qualität der Schnittfläche zu erwarten ist. Werden Sichtflächen des Profils durchtrennt, ist eine niedrige Schnittgeschwindigkeit hilfreich, werden Seitenflächen des Profils durchtrennt, können höhere Schnittgeschwindigkeiten ausreichend sein. Der Rückhub kann wieder mit sehr hoher Geschwindigkeit ausgeführt werden. Aus dem Hubweg des Spannrahmens in Verbindung mit der Bewegungsgeschwindigkeit und dem Zeitbedarf für das Zurückschieben der Cuttervorrichtung in die Ausgangsposition wird die Zyklusdauer bestimmt, welche auch bei hohen Extrusionsgeschwindigkeiten keinesfalls zu deren Limitierung führen darf.

Zum Optimieren und "Programmieren" des Bewegungsablaufes wird ein "Lernvorgang" vorgesehen, der entweder direkt beim Cutter, wobei ein Profilstück mit knappem Abstand zum Messer eingespannt ist, erfolgt, oder wahlweise auf einem Bildschirm anhand CAD-Simulation, welche die Situation von Messer und Profil während des Trennvorganges anschaulich wiedergibt, vorgesehen. Es wird der gesamte Verfahrweg der vertikalen Vorschubachse schrittweise abgefahren und bei markanten Punkten des Messers wird die gewünschte Geschwindigkeit zum Verfahren der vorhergehenden (oder nachfolgenden) Wegstrecke elektronisch vorgegeben. Normalerweise befindet sich das Messer in der oberen Endposition, weil das Messer hier mit einer Temperiervorrichtung beheizt wird. Ausgehend von der obersten Position des Messers bis knapp oberhalb des Profils wird eine hohe, gegebenenfalls auch maximale Geschwindigkeit für der Ansteuerung der Vorschubachse hinterlegt. Ab dem ersten Kontakt mit dem Profil wird die Verfahrgeschwindigkeit sukzessive verringert, in Abhängigkeit davon, welche Schnittlängen aktuell an der Schneide durchtrennt werden müssen und welche Reibkräfte infolge der Anpresskräfte des Profils seitlich auf die Schneide zu erwarten sind. Weitere Einflussfaktoren für die Vorgabe einer sinnvollen Vorschubgeschwindigkeit ergeben sich noch aus der Wirksamkeit der Profilabstützung bei kritischen Profilsektionen (z.B. Überschlag, = seitlich überstehende Profilsektion), aus der Anordnung von Innenwänden des Profils u.a. Es bedarf einiger Erfahrung, den Geschwindigkeitsverlauf so einzustellen, dass die Qualität der Schnittfläche optimiert wird und die maximal verfügbare Zykluszeit nicht überschritten wird. Da alle Parameter für die Ansteuerung der Vorschubachse digital hinterlegt werden, können diese unter Berücksichtigung der Erkenntnisse nach der Auswertung von Probeschnitten bereichsweise mit wenig Aufwand verändert werden.

<u>Maßnahme</u> B: Verändern des Winkels zwischen Schneide und Bewegungsrichtung:

Hierfür werden im Halterahmen mehrere Aufnahmepunkte und auch einige Zwischenstücke zur Überbrückung von Längenunterschieden vorgesehen, so dass Messer mit unterschiedlichen Winkeln im Bereich von etwa 30° bis 60° eingespannt werden können. Beträgt dieser Winkel gegenüber der Schnittrichtung mehr als 45°, verändert sich das Schneidverhalten in Richtung "ziehender Schnitt", was eine geringere Belastung des Messers bedeutet. Beträgt dieser Winkel gegenüber der Schnittrichtung weniger als 45°, entspricht das Schneidverhalten einem "drückenden Schnitt". Es besteht jedoch ein enger Zusammenhang mit dem Schnittfenster, so dass die Grenzen durch die Profilgeometrie und der Orientierung des Profils sehr eng vorgegeben sind.

<u>Maßnahme C: Verwendung von zwei Messern:</u>

Die zwei Messer werden etwa spiegelbildlich zueinander angeordnet, so dass die Schneiden V-förmig gegeneinander gerichtet sind und einen relativ spitzen Winkel zueinander bilden. Die Öffnung dieses "V" ist nach unten gerichtet. Beim Schnittvorgang ist jedem Messer nur etwa die Hälfte des Profilquerschnittes zugeordnet, jedes Messer schneidet nur die halbe Profilbreite. Dadurch können sehr kleine Neigungswinkel zwischen Schneide und Bewegungsrichtung realisiert werden, so dass die Schnittcharakteristik deutlich "ziehend" ist. Damit einher geht eine geringe Belastung des Messers "senkrecht zur Schneide", wodurch die Bruchgefahr äußerst gering ist und ein Verlaufen der Schneide nahezu ausgeschlossen werden kann. Die Schneide zentriert sich selbst.

<u>Maßnahme D: Hartbeschichten des Messers und/oder Auftragen eines Schmier- oder Trennmittels:</u>

Ein Hartbeschichten der Schneide, besser des ganzen Messers, vermindert den Verschleiß und erhöht die Standzeit. Gleichzeitig wird auch der Reibkoeffizient vermindert. Bewährt hat sich eine Hartbeschichtung aus TiN (Titannitrit). Wird von Zeit zu Zeit das Messer mit einem Schmiermittel oder einem Trennmittel, ähnlich wie bei Spritzgießwerkzeugen in Verwendung, besprüht, verringert sich ebenfalls der Reibkoeffizient. Dadurch werden die Messer mit kleineren Kräften belastet, so dass auch dadurch die Bruchgefahr sinkt.

<u>Maßnahme E: Zweite Vorschubachse:</u>

Einen großen Entwicklungssprung beim Cutter bedeutet die Aufrüstung mit einer zweiten Vorschubachse, was dem Messer zu einer translatorischen Bewegung in beliebige Richtungen in der Schnittebene verhilft. Wesentlich ist also, dass die Bewegung nicht wie bei bekannten Lösungen linear oder im Wesentlichen linear ist, sondern zweidimensional entlang eines Polygons oder einer gekrümmten Kurve. Hilfreich beim Schneiden sind dabei alle Richtungen, bei denen die Geschwindigkeitskomponente senkrecht zur Schneide vom Messer weg in Richtung Profil weist, also die Schneide tiefer in das Profil eindringt. Die nunmehr zwei Vorschubachsen können mit wenig Aufwand so angesteuert werden, dass sie das Messer reproduzierbar und harmonisch in die gewünschte Richtung und mit der gewünschten Geschwindigkeit bewegen. Ein entscheidender Vorteil bei einem derartigen Cutter ist, dass kritische Profilsektionen mit einem deutlich ziehenden Schnitt durchtrennt werden können, wobei auch die Geschwindigkeitskomponente in Richtung der Schneide ein oder mehrmals die Richtung wechseln kann, ähnlich wie beim Sägen mit einer Handsäge oder beim Schneiden von Speck mit einem Messer.

Bei einem ziehenden Schnitt wird die Schneide deutlich weniger belastet als bei herkömmlichen Cuttern. Bei einem herkömmlichen Cutter ist die einwirkende Kraft senkrecht zur Schneide wesentlich höher als bei einem erfindungsgemäßen Cutter mit einem ziehenden Schnitt. Diese senkrecht zur Schneide wirkende Kraft verursacht eine Biegespannung des Messers, welche zu hohen Druckspannungen an der Vorderkante des Messers führt. Die unter Druckbelastung stehende Schneide neigt zu einem seitlichen Ausweichen der Vorderkante des Messers, was eine Kettenreaktion auslöst: Verläuft die Schneide nur minimal in eine Richtung, dann verstärkt sich das Verlaufen mit jedem weiteren Eindringen in das Profil. Nur in wenigen Fällen übersteigt das Verlaufen nicht das kritische Maß von wenigen Millimetern, so dass das Messer nicht bricht und weiterhin einsatzbereit ist. In den meisten Fällen verläuft sich die Schneide jedoch so stark, dass das Messer schlagartig bricht.

Die für die synchrone Steuerung der beiden Vorschubachsen erforderlichen Daten (speziell Geschwindigkeitsverlauf in Abhängigkeit von der aktuellen Position) und das Ablesen der Leistungsaufnahme der Antriebsmotoren erlauben eine sehr gute Darstellung des Kraftverlaufes beim Arbeitshub. Da aus diesen Daten auch die Position der Schneide in Bezug auf das Profil hervorgeht, kann ebenso der Kraftverlauf in Abhängigkeit von der Schnitttiefe angezeigt werden. Belastungsspitzen auf das Messer können erkannt werden. Diese Belastungsspitzen können beseitigt werden, indem der Bewegungsablauf des Messers hinsichtlich Vorschub-Geschwindigkeit und "ziehender Schnitt" verändert wird.

Außerdem gibt der Kraftverlauf je Schnitthub und der Vergleich mit der Historie wertvolle Informationen über den Verschleiß der Schneide. Ein Alarm im Vorfeld eines Messerbruches hilft einen Störfall zu vermeiden, indem das abgenützte Messer rechtzeitig getauscht wird. Zweckmäßig ist es, den Kraftverlauf getrennt entsprechend der beiden Komponenten in Richtung der Schneide und senkrecht dazu auszuwerten. Vor allem die Komponente senkrecht zur Schneide ist kritisch in Hinblick auf einen Messerbruch.

<u>Maßnahme F: Winkelverstellung:</u>

Einen weiterer Entwicklungssprung beim Cutter wird erzielt, wenn für das Messer ein zusätzlicher Freiheitsgrad in Form einer Winkelverstellung eingeführt wird. Eine fixe, mechanisch wirkende Einstellung des Winkels zwischen Schneide und Auflagefläche, wie oben bereits angeführt, erweitert die Optimierungsmöglichkeiten für das Trennen von kritischen Profilen im Zusammenwirken mit der translatorischen Bewegung infolge der vertikalen und horizontalen Vorschubachsen bereits erheblich. Es sind ziehende Schnitte in beide Richtungen möglich, ähnlich wie beim Schneiden von Speck mit einem Küchenmesser.

<u>Maßnahme</u> G: Verstellbarer Neigungswinkel des Messers :

Ist zusätzlich noch der Neigungswinkel des Messers mithilfe einer weiteren elektronisch angesteuerten Achse während des Trennvorganges verstellbar, dann kann der Trennvorgang bei jeder Profilkontur und bei jeder Orientierung des Profils an das theoretische Optimum angepasst werden. Die Grenzen werden dann nur durch die Stabilität des Messers, die räumlichen Gegebenheiten des Cutters und die Geometrie des Profils bestimmt.

Erfindungsgemäß sind die Maßnahmen der Patentansprüche 1 und 9 und optional die der abhängigen Ansprüche vorgesehen.

Aus der vorstehenden Beschreibung geht hervor, dass beim Trennen eines vorgegeben Profils (Geometrie und Wanddicken sowie Aufspannorientierung) vor allem drei Faktoren für die Schnittqualität und die mechanische Beanspruchung des Messers von wesentlichem Einfluss sind:

A Bewegungsrichtung des Messers
B Bewegungsgeschwindigkeit des Messers
C Winkel zwischen der Schneide des Messers und der aktuell zu schneidenden Profilsektion

Durch Maßnahme A (siehe oben) wird die Bewegungsgeschwindigkeit des Messers abschnittsweise verändert.

Durch Maßnahme B (siehe oben) wird der Winkel zwischen Messer (konkret der Schneide des Messers) und dem Profil mechanisch verändert.

Durch Maßnahme C (siehe oben) wird der Winkel zwischen der Bewegungsrichtung des Messers und der Schneide des Messers verkleinert (und zusätzlich der erforderliche Hub zum Trennen des Profils verkleinert).

Durch Maßnahme D (siehe oben) wird die Reibung zwischen Messer und dem Profil und damit die mechanische Beanspruchung des Messers verringert.

Durch Maßnahme E (siehe oben), überlagerte Bewegung des Messers entlang einer horizontalen Achse, werden die Bewegungsrichtung und die Bewegungsgeschwindigkeit in weiten Grenzen frei ansteuerbar.

Durch Maßnahme F (siehe oben) werden sowohl der Winkel zwischen dem Messer und dem Profil als auch der Winkel zwischen der Bewegungsrichtung und der Schneide des Messers gleichermaßen verändert. Infolge der mechanischen Einstellung ist die Orientierung des Messers für den gesamten Schnittvorgang konstant.

Durch Maßnahme G (siehe oben), ähnlich wie Maßnahme F, jedoch Drehverstellung des Messers durch eine dritte Achse, kann die Orientierung des Messers während des Schnittvorganges verändert werden.

Die Maßnahmen A bis G sind in vielen Varianten miteinander kombinierbar, so dass die oben genannten drei Faktoren in weiten Grenzen, entweder mechanisch oder elektrisch ansteuerbar, in weiten Grenzen veränderbar sind. Bei schwierigen Schnittaufgaben wird dadurch eine Optimierung der Schnittqualität ermöglicht.

Durch Kombination der Maßnahmen A und E wird ein Verfahren erreicht, bei dem die Bewegung des Messers vom Anfangszustand in den Endzustand aus einer Hauptbewegung und einer Querbewegung zusammengesetzt ist.

Vorteilhaft ist also, dass die Bewegung nicht wie bei bekannten Lösungen linear oder im Wesentlichen linear ist, sondern zweidimensional entlang eines Polygons oder einer gekrümmten Kurve. Die Hauptbewegung ist im Wesentlichen die, die einer direkten Verbindung von Anfangszustand und Endzustand entspricht, die Querbewegung eine dazu geneigte Bewegung, also beispielsweise eine Bewegung senkrecht zur Hauptbewegung. Dies bedeutet insbesondere, dass neben der typischerweise senkrecht nach unten gerichteten Hauptbewegung eine senkrecht dazu gerichtete Querbewegung ausgeführt werden kann, wobei diese Querbewegung selektiv in einzelnen Bereichen ausgeführt wird. Beispielsweise kann eine solche Querbewegung eine Verbesserung der Qualität bewirken, wenn ein waagerecht liegender Abschnitt des Profils nicht einfach durch das senkrecht nach unten bewegte Messer durchtrennt wird, sondern gleichzeitig eine waagrechte Bewegung des Messers überlagert wird. Da die Schneide des Messers typischerweise nicht genau senkrecht auf die Hauptbewegungsrichtung angeordnet ist, also nicht waagrecht sondern leicht ansteigend orientiert ist, wird durch diese Querbewegung auch die Schnittgeschwindigkeit beeinflusst. Dieser Effekt kann bei der Festlegung der Bewegungsgeschwindigkeit in der Hauptbewegungsrichtung entsprechend berücksichtigt werden.

Wesentlich zur Erreichung einer hohen Schnittqualität ist, dass die Hauptbewegung und die Querbewegung reproduzierbar und synchron ansteuerbar sind.

Eine begünstigte Ausführungsvariante der Erfindung sieht vor, dass die Querbewegung eine hin- und hergehende Bewegung ist. Insbesondere ist es dabei günstig, wenn die Querbewegung in Richtung einer Schneide des Messers erfolgt.

Die zusammengesetzte Bewegung ist somit zick-zack-förmig oder sinusförmung und entspricht in etwa einer händisch ausgeführten Schneidbewegung. Die Schnittrichtung ist dabei nicht nur senkrecht nach unten, sondern kann nahezu jede von der Schneide wegweisende Richtung aufweisen.

**EP 3 685 984 B1**

Ein weiterer Aspekt der erfindungsgemäßen Lösung ist, dass die Bewegung des Messers vom Anfangszustand in den Endzustand mit veränderlicher Geschwindigkeit durchgeführt wird. Die Grundidee dabei ist, dass die Bewegungsgeschwindigkeit des Messers unterschiedlich kritisch ist, je nachdem welche Teile des Profils im jeweiligen Augenblick den Schnittvorgang unterworfen sind. Auf diese Weise ist es möglich, die Dauer des Schnittvorgangs zu verkürzen, ohne eine Minderung der Qualität der Schnittfläche befürchten zu müssen.

Im Anfangszustand ist das Messer typischerweise eine vorbestimmte Wegstrecke oberhalb des abzutrennenden Profilstrangs angeordnet. Die Vorschubbewegung bis zur Berührung des Messers mit dem Profilstrang kann mit maximaler Geschwindigkeit durchgeführt werden, ohne Nachteile in Kauf nehmen zu müssen. Ebenfalls besteht die Möglichkeit, dass die Bewegung des Messers vom Anfangszustand bis zur Berührung mit dem Profilstrang mit einer höheren Geschwindigkeit durchgeführt wird als die Bewegung des Messers durch den Profilstrang hindurch.

Eine besonders wirksame Verkürzung der Schnittdauer kann insbesondere dadurch erreicht werden, dass die Bewegung des Messers durch den Profilstrang hindurch in Bewegungsabschnitte unterteilt wird und die Bewegung innerhalb eines Bewegungsabschnitts mit einer unterschiedlichen Geschwindigkeit im Vergleich zu benachbarten Bewegungsabschnitten erfolgt. Die Wahl der jeweiligen Geschwindigkeit in Abhängigkeit von der Stellung des Messers kann dabei an der maximal möglichen Geschwindigkeit in diesem Bereich orientiert werden, bei der keine Verschlechterung der Qualität des Schnitts auftritt.

In diesem Zusammenhang ist es besonders günstig, wenn die Bewegung des Messers in Bewegungsabschnitten, in denen fragile Bereiche des Profilstrangs durchtrennt werden, langsamer erfolgt als in Bewegungsabschnitten, bei denen dies nicht der Fall ist. Als fragile Bereiche im obigen Sinn sind so genannte Extremitäten des Profils anzusehen, d.h. Vorsprünge mit Dichtungsnuten und dergleichen oder auch dünnwandige Stege im Inneren des Profils.

Zum erfindungsgemäßen Verfahren gehört auch die Festlegung des Verlaufs der Schnittgeschwindigkeit. In einer bevorzugten Ausführungsvariante der Erfindung ist vorgesehen, dass vor dem Beginn des Extrusionsprozesses ein Lernzyklus durchlaufen wird, bei dem die Bewegung des Messers vom Anfangszustand in den Endzustand mit verringerter Geschwindigkeit simuliert wird, um für einzelne Bewegungsabschnitte die jeweilige Geschwindigkeit des Messers festlegen zu können. Dabei wird zur Durchführung des Lernzyklus in den ansonsten still stehenden Cutter ein zuvor produziertes Stück des jeweiligen Profils eingelegt und das Messer wird mit geringer Geschwindigkeit händisch gesteuert und so schrittweise nach unten verfahren. Durch das Setzen von Markierungen können Bewegungsabschnitte definiert werden und es kann zu jedem Bewegungsabschnitt eine entsprechende Geschwindigkeit vorgegeben werden. Die Wahl dieser Geschwindigkeit kann aufgrund von Erfahrungswerten erfolgen und auch im laufenden Produktionsprozess angepasst werden, wenn in bestimmten Bereichen der Schnittfläche Probleme auftreten sollten.

Die vorliegende Erfindung betrifft auch eine Vorrichtung zur Abtrennung von Profilabschnitten in Extrusionslinien, mit einem Schlitten, der in Längsrichtung des Profilstrangs zwischen einer stromaufwärtigen Stellung und einer stromabwärtigen Stellung beweglich geführt ist, wobei der Schlitten eine Klemmeinrichtung aufweist, um ihn mit dem Profilstrang zeitweilig zu verbinden, mit einem am Schlitten beweglich geführten Messer.

Eine Verkürzung der Dauer des Schnittes kann erfindungsgemäß dadurch erreicht werden, dass eine Steuerungsvorrichtung vorgesehen ist, die die Bewegung des Messers vom Anfangszustand in den Endzustand mit veränderlicher Geschwindigkeit steuert. Somit gibt die Steuerungsvorrichtung das Geschwindigkeitsprofil für die Bewegung des Messers vor.

Die Eingabe der jeweiligen Geschwindigkeiten kann bevorzugter Weise dadurch erleichtert werden, dass die Steuerungsvorrichtung die Festlegung einer jeweils vorbestimmten Geschwindigkeit für einzelne Bewegungsabschnitte des Messers vom Anfangszustand in den Endzustand vorsieht.

Eine besonders bevorzugte Ausführungsvariante der vorliegenden Erfindung sieht eine erste Führung für die Bewegung des Messers vom Anfangszustand in den Endzustand und eine weitere Führung für eine Bewegung des Messers rechtwinkelig dazu vor. Dadurch kann eine besonders feine Anpassung der Bewegung des Messers in Bezug auf das Profil realisiert werden.

Insbesondere ist es günstig, wenn das Messer eine Schneide aufweist, die mit der Bewegungsrichtung des Messers vom Anfangszustand in den Endzustand einen spitzen Winkel einschließt.

Im Zusammenhang mit der vorliegenden Erfindung ist es besonders vorteilhaft, wenn das Messer eine Einrichtung zur Beheizung aufweist. Es hat sich herausgestellt, dass durch die selektive Auswahl einer angepassten Schnittgeschwindigkeit die Wirkung der Beheizung gesteigert werden kann, da bei langsamer Schnittgeschwindigkeit naturgemäß die Dauer der Einwirkung der Wärme vergrößert wird. Auf diese Weise können besonders gute Ergebnisse erzielt werden.

Eine weitere bevorzugte Ausführungsvariante der Erfindung ist gegeben, wenn das Messer in Richtung der Schneide vorgespannt ist. Auf diese Weise kann die Gefahr einer Ausweichbewegung des Messers bei hohen Schnittgeschwindigkeiten verringert werden.

In der Folge wird die vorliegende Erfindung anhand der in den Figuren dargestellten Ausführungsbeispiele näher erläutert. Es zeigen:

Fig.1    eine schematische Darstellung einer erfindungsgemäßen Cutteranlage zur Abtrennung von Profilabschnitten mit einem Raupenabzug;

Fig.2    eine Cuttervorrichtung in Basisausführung, Ansicht gegen die Extrusionsrichtung in einem Schnitt nach Linie A - A in Fig. 1;

Fig.3    Spannrahmen und Messer mit Neigungswinkel $\alpha$ = 60°, Ansicht gegen die Extrusionsrichtung;

Fig.4    Spannrahmen und Messer mit Neigungswinkel $\alpha$ = 45°, Ansicht gegen die Extrusionsrichtung;

Fig.5    Spannrahmen und Messer mit Neigungswinkel $\alpha$ = 30°, Ansicht gegen die Extrusionsrichtung;

Fig.6    Spannrahmen und Messer mit Neigungswinkel $\alpha$ = 60° - Lernvorgang: Bereichsweise unterschiedliche Schnittgeschwindigkeit;

Fig.7    Spannrahmen mit zwei Messern mit jeweils Neigungswinkel $\alpha$ = 20°, Ansicht gegen die Extrusionsrichtung;

Fig.8    eine Cuttervorrichtung mit zusätzlicher horizontaler Achse, Ansicht gegen die Extrusionsrichtung gemäß Schnittposition A - A in Fig. 1;

Fig.9    Spannrahmen mit Messer für den Einsatz in einer Cuttervorrichtung mit zwei Achsen - Lernvorgang: Bereichsweise unterschiedliche Schnittgeschwindigkeit und unterschiedliche Bewegungsrichtung;

Fig.10   Vertikalrahmen mit winkelverstellbarem Messer, Ansicht in Extrusionsrichtung;

Fig.11   eine schematische Darstellung, die die Einstellung der Schnittgeschwindigkeit erklärt;

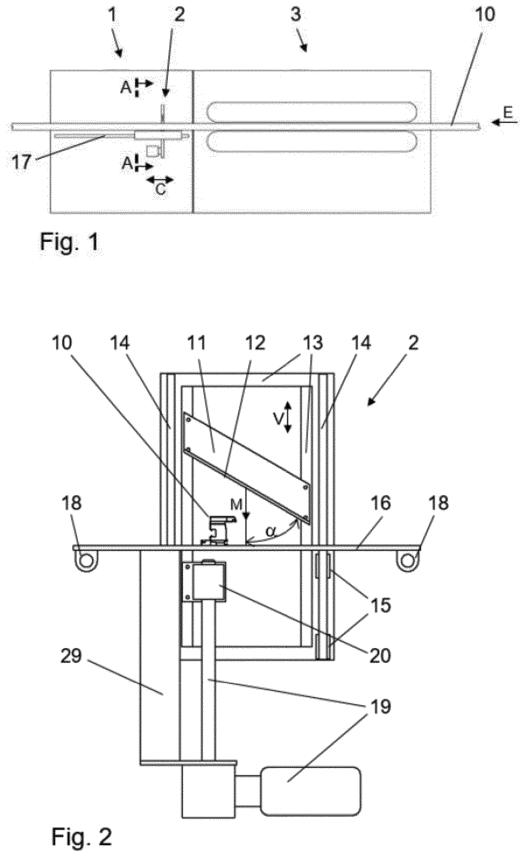

Fig. 1 zeigt die Anordnung der Vorrichtung 1 zur Abtrennung von Profilabschnitten in Extrusionslinien im Anschluss an einen Raupenabzug 3. Das endlos gefertigte Profil in Form eines Profilstrangs 10 wird vom Raupenabzug in Extrusionsrichtung E von links nach rechts transportiert und in der Vorrichtung 1 auf üblicherweise 6 m lange Profilstangen abgelängt. Das Abtrennen eines Profilabschnitts vom Profilstrang 10 erfolgt durch eine Cuttervorrichtung 2. Zum Zeitpunkt des Abtrennens bewegt sich die Cuttervorrichtung 2 synchron mit dem Profilstrang 10 in Extrusionsrichtung mit und wird anschließend wieder in die Ausgangslage zurückgeschoben, siehe die Richtungspfeile C.

Die Fig. 2 zeigt eine Cuttervorrichtung 2 in Basisausführung gemäß der Schnittführung A - A in Fig. 1. Das Messer 11 mit der Schneide 12 ist in einem vertikal verschiebbaren Spannrahmen 13 eingespannt. Der Spannrahmen ist beispielsweise mit Holmen 14 versehen, welche in Lagerbuchsen 15 geführt sind. Diese Lagerbuchsen 15 sowie der Antrieb 19 und die Gewindespindel für die vertikale Achse sind ortsfest mit der Grundplatte 16 verbunden. Mit dieser Gewindespindel ist der Spannrahmen 13 über die Gewindemutter 20 in Schnittrichtung M nach unten und zurück in die Ausgangslage nach oben verschiebbar. Der hier dargestellte Linearantrieb, bestehend aus einer drehenden Gewindespindel und feststehender Mutter, ist nur beispielhaft dargestellt. Prinzipiell können auch alternative Linearantriebe eingesetzt werden, z.B. Zahnstange mit Zahnrad. Das Profil 10 wird während des Schnittvorganges gegen die Grundplatte 16 verspannt, so dass die gesamte Cuttervorrichtung 2 mit dem Profil 10 in Extrusionsrichtung E mitwandert, wobei die Holme 17 mit den Lagerbuchsen 18 zusammenwirken.

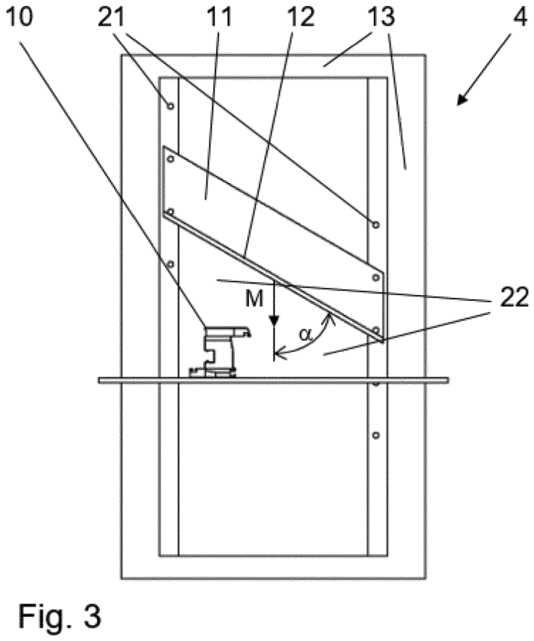

Die Fig. 3 bis 5 zeigen jeweils die Baugruppe 4, wobei der Neigungswinkel $\alpha$ jeweils unterschiedliche Werte aufweist. In Fig. 3 beträgt dieser 60°, was im Bereich der jetzt bekannten Cutter liegt. Bei diesem relativ großen Winkel entspricht die Schnittcharakteristik einem drückenden Schnitt. In diesem Fall ist das Schnittfenster 22, welches durch die Konturen von Grundplatte 16, den Innenflächen des Spannrahmens 13 und der Schneide 12 gebildet wird, trapezförmig und vergleichsweise groß. Das Schnittfenster 22 ist der Bereich, innerhalb dessen die Profile 10 Platz finden müssen, um durchtrennt werden zu können. Die Schnittkraft, welche sich aus der Kraft für das eigentliche Trennen des Profils an der Schneide 12 und aus Reibungskräften infolge des seitlichen Anpressens des Profils an das Messer zusammensetzt, ist immer gegen die Schnittrichtung M des Messers 11 gerichtet. Das bedeutet, dass bei einem drückenden Schnitt im Messer höhere Druckspannungen an der Vorderkante des Messers im Bereich der Schneide 12 entstehen, welche das Verlaufen des Messers fördern und daher eine große Bruchgefahr für das Messer darstellen.

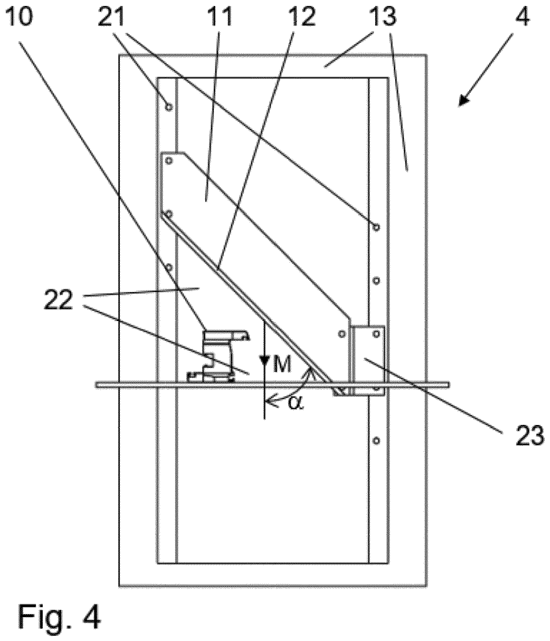

In Fig. 4 beträgt der Neigungswinkel $\alpha$ 45°, wodurch das Schnittfenster 22 jetzt dreieckig und kleiner als oben ist. Um unterschiedliche Neigungswinkel realisieren zu können, sind im Spannrahmen 13 nunmehr erfindungsgemäß mehrere Befestigungspunkte 21 für das Messer vorgesehen. Die Verwendung von Zwischenstücken 23 ist zweckmäßig, um die Messer 11 kürzer gestalten zu können, wodurch diese stabiler und die Bruchgefahr verringert sind.

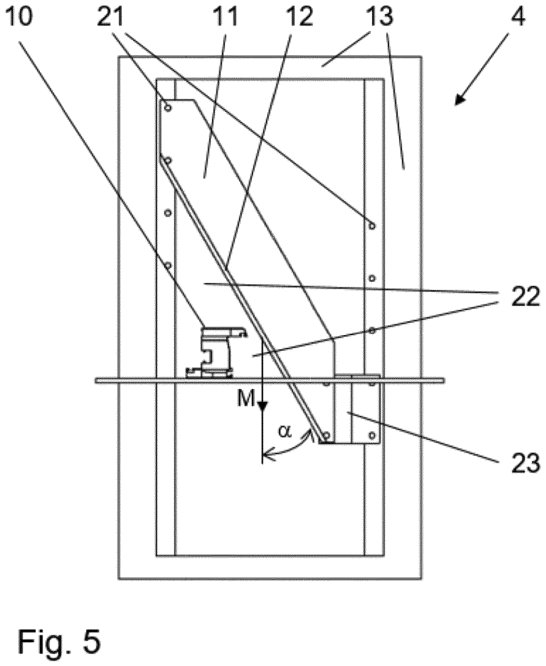

In Fig. 5 beträgt der Neigungswinkel $\alpha$ nur mehr 30°, wodurch das Schnittfenster 22 noch kleiner als in Fig. 4 ist.

Dieser spitze Winkel verändert das Schneidverhalten in Richtung "ziehender Schnitt". Die Schnittkraft ist immer gegen die Schnittrichtung M des Messers 11 gerichtet, siehe oben. Das bedeutet, dass bei einem ziehenden Schnitt an der Schneide 12 des Messers 11 vorwiegend Zugspannungen entstehen, welche kaum eine Bruchgefahr für das Messer darstellen. Das Schnittfenster 22 ist allerdings vergleichsweise klein, aber übliche Fenster-Hauptprofile können problemlos durchtrennt werden.

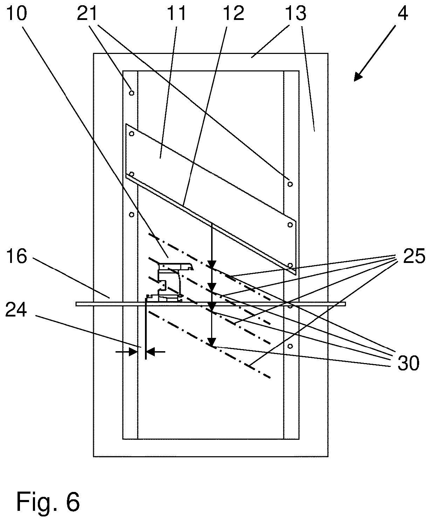

Anhand von Fig. 6 wird gezeigt, wie unterschiedliche Vertikalgeschwindigkeiten des Messers 11 in Abhängigkeit von der Geometrie des Profils und der Position des Messers zum Profil vorgebbar sind. Dieser Prozess, der Lernvorgang, kann entweder direkt an der Maschine, also am Cutter, während des Rüstvorganges der Extrusionslinie erfolgen, oder anhand einer CAD-Simulation, welche die räumlichen Gegebenheiten von Cuttervorrichtung 2, der vertikalen Bewegung der Baugruppe 4 von Spannrahmen 13 und Messer 11, die Geometrie und Lage des Profils 10 und dessen Aufspannsituation exakt widergibt. Wird der Lernvorgang physisch am Cutter durchgeführt, dann wird ein Profilstück mit knappem Abstand "vor" dem Messer (bezogen auf die Extrusionsrichtung) eingespannt. Ist der Ablauf von Arbeitshub und Rückhub einmal digital erfasst und abgespeichert, so ist dieser Prozess sehr gut reproduzierbar und kann bei jedem Produktionslos des betreffenden Profils 10 wieder aufgerufen werden.

Ein Lernvorgang wird anhand eines nichteinschränkenden Beispiels beschrieben. Die Ausgangssituation für den Lernvorgang ist in Fig. 6 dargestellt: Der Spannrahmen 13 befindet sich relativ zur Grundplatte 16 in der obersten Position. Das Profil 10 liegt auf der Grundplatte 16 auf und weist eine Seitenabstand 24, hier etwa 15 mm, zum Spannrahmen 13 auf. In dieser Position ist es beim Trennvorgang fest eingespannt. Hierfür erforderliche Klemmvorrichtungen sind nicht dargestellt, um die Übersichtlichkeit zu wahren.

Die relevanten Angaben sind in der folgenden Tabelle 1 zusammengefasst:

| Wegpunkt Nr. | Bewegungsabschnitt | Max. Geschwindigkeit: | | 180 mm/s | | |
| | | Vertikalposition mm | Geschwindigkeit | | Arbeits- und Rückhub | |
| | | | relativ - | absolut mm/s | mm | s |
| 0 | | 0 | | | | |
| 1 | b1 | -85 | 100% | 180 | 85 | 0,47 |
| 2 | b2 | -128 | 40% | 72 | 43 | 0,60 |
| 3 | b3 | -153 | 80% | 144 | 25 | 0,17 |
| 4 | b4 | -202 | 40% | 72 | 49 | 0,68 |
| 5 | b5 | 0 | 85% | 153 | -202 | 1,32 |
| 6 | b6 | | | | | |
| 7 | b7 | | | | | |
| 8 | b8 | | | | | |
| 9 | b9 | | | | | |
| Gesamt | | | | | 0 | 3,24 |

Tabelle 1: Daten in Zusammenhang mit dem Lernvorgang

Die Ausgangsposition des Messers 11 bzw. der Schneide 12 betrifft den Wegpunkt 0 in der Tabelle 1 bei einer Vertikalposition von 0 mm. Der Bediener / Programmierer für den Lernvorgang kann nur auf die hellgrau hinterlegten Eingabefelder zugreifen. Die anderen sind gesperrt, um Fehlbedienungen zu vermeiden. Als erstes wird nun die Baugruppe 4, Spannrahmen 13 mit Messer, durch den Bediener / Programmierer schrittweise nach unten verschoben, bis die Lage der Schneide 12 zum Profil 10 eine relevante Vertikalposition aufweist, in diesem Fall ist das "knapp vor dem Auftreffen auf das Profil". Diese Vertikalposition wird unter Wegpunkt 1 "auf Knopfdruck" mit "-85 mm" eingetragen, als relative Geschwindigkeit für die zurückliegende Strecke gibt der Bediener 100% ein. D.h., die Wegstrecke von 0 bis -85 mm betrifft einen Leerhub, das Profil wird noch nicht durchtrennt, und wird mit der maximalen Geschwindigkeit von 180 mm/s zurückgelegt. Die maximale Geschwindigkeit ist jene technisch sinnvolle Geschwindigkeit, welche aufgrund der Leistungsfähigkeit des Linearantriebes in Abhängigkeit von den bewegten Massen die Obergrenze darstellt, bei der Erschütterungen aufgrund von Beschleunigungskräften keinen negativen Einfluss auf die Schnittqualität und die Lebensdauer des Cutters erwarten lassen. Die Bewegung des Messers 12 vom Wegpunkt 0 bis zum Wegpunkt 1 wird als Bewegungsabschnitt b1 bezeichnet. Die Baugruppe 4 wird schrittweise weiter nach unten verschoben. Die Schneide 12 dringt in das Profil ein (beim Lernvorgang nur visuell...) und hat bis zur Vertikalposition "-128 mm" die obere Sichtfläche des Profils 10 komplett durchtrennt. Unter Wegpunkt 3 wird automatisch die Position "-128 mm" eingetragen, als relative Geschwindigkeit für die zurückliegende Strecke gibt der Bediener 40% ein. D.h., die Wegstrecke von -85 bis -128 mm soll mit der Geschwindigkeit "40% von 180 mm/s, also 72 mm/s", zurückgelegt werden. Die Bewegung des Messers 12 vom Wegpunkt 1 bis zum Wegpunkt 2 wird als Bewegungsabschnitt b2 bezeichnet. In diesem Sinne legt der Bediener weitere relevante Vertikalpositionen der Schneide 12 fest und gibt die Sollgeschwindigkeiten für das Trennen der betreffenden Teilstrecken vor. Ist das Profil schließlich komplett durchtrennt, hier nach Durchlaufen des Bewegungsabschnittes b4 bei der Vertikalposition "202 mm", gibt der Bediener als nächsten Wegpunkt die Ausgangsposition, also "0mm", und die für den Rückhub gewünschte Geschwindigkeit, in diesem Beispiel also "85% von 180 mm/s" vor. Dieser Bewegungsabschnitt b5 entspricht in diesem Beispiel dem Rückhub zurück in die Ausgangsposition. Ist die Zeitdauer für einen vollständigen Zyklus knapp, muss nicht der Wegpunkt 1, die oberste Position "0 mm", angefahren werden, sondern kann als Warteposition für den nächsten Arbeitshub auch der Wegpunkt 2, entsprechend "-85 mm", festgelegt werden. Die Zykluszeit verkürzt sich dadurch um die Dauer der beiden Leerhübe nach unten und nach oben über eine Wegstrecke von 85 mm. Aus dem Diagramm ist der Zeitbedarf für das Durchtrennen des gegenständlichen Profils ablesbar. Ausgehend von der Nullposition erfolgt der Arbeitshub mit 4 unterschiedlichen Geschwindigkeiten bis 202 mm in 1,92 s (Summe 0,47 + 0,60 + 0,17 + 0,68 s) nach unten und anschließend der Rückhub mit einer Geschwindigkeit von 153 mm/s nach oben in die Nullposition in 1,32 s, insgesamt also 3,24 s. Der Lernvorgang ist nun abgeschlossen und die relevanten Daten sind für das Ablängen im Extrusionsbetrieb abgespeichert. Zweckmäßigerweise soll der korrekte Ablauf des Trennvorganges noch kontrolliert werden, indem dieser zunächst ohne Profil manuell ausgelöst wird und dabei beobachtet wird, ob die Umschaltwegpunkte und Geschwindigkeiten wie geplant eingehalten werden, und ob das Profil zur Gänze durchtrennt wird.

Die Pfeile bei den Wegpunkten 30 in Fig. 6 stellen die Bewegungsrichtung des Messers 11 dar und kennzeichnen auch die 4 unterschiedlichen Bewegungsabschnitte b1 bis b4 beim Hub nach unten. Der Bewegungsabschnitt b5, Rückhub in die Ausgangsposition, ist nicht dargestellt.

Es ist zweckmäßig, für jeden Arbeitshub den Kraftbedarf zum Verschieben der Baugruppe 4, Spannrahmen 13 mit Messer, zu messen und für einen laufenden Vergleich abzuspeichern. Die Kraft zum Verschieben der Baugruppe setzt sich aus 3 Komponenten zusammen: Massenkräfte zum Beschleunigen und Abbremsen des Spannrahmens 13, Reibungskräfte, weil das Profil auf beide Seiten des Messers 11 drückt, da Kunststoff durch das Messer verdrängt wird, und die eigentliche Schnittkraft an der Schneide 12, um das Profil zu trennen.

Im einfachsten Fall lässt sich ein Kraft - Weg - Diagramm durch Auswertung der elektrischen Daten der vertikalen Achse 19 bestimmen: Der Weg errechnet sich aus dem Drehwinkel der Gewindespindel, die Kraft aus der Stromaufnahme des Antriebsmotors. Die Kraftmessung wird genauer, wenn im Bereich der Mutter 20 für die vertikale Achse oder im Bereich der Gewindespindel 19 ein geeigneter Kraftaufnehmer eingebaut wird. Wird der Kraftverlauf bei jedem Arbeitshub über einen längeren Zeitraum verglichen, lassen sich Rückschlüsse auf die Funktion der Vorrichtung und auf den Zustand des Messers 11 ziehen. Im Idealfall erkennt man einen bevorstehenden Bruch des Messers und kann dieses rechtzeitig austauschen.

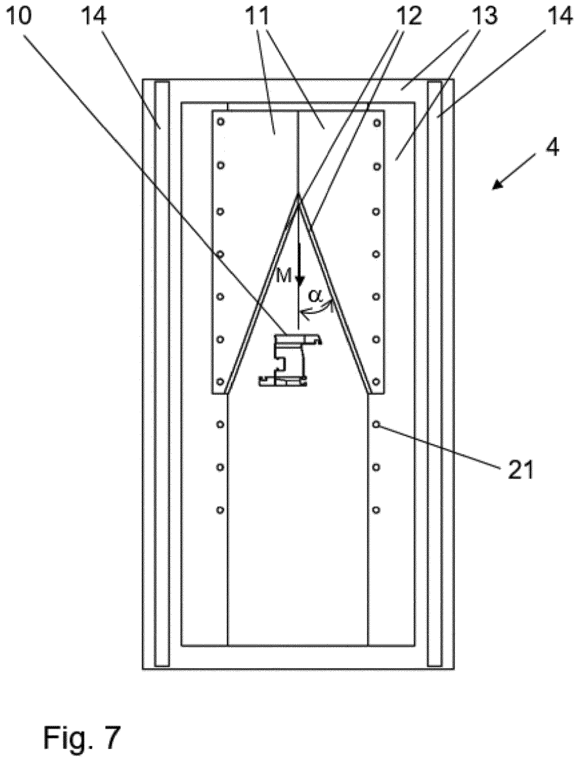

Fig. 7 zeigt eine Baugruppe 4, Spannrahmen 13 mit Messer, bei welcher zwei Messer 11 befestigt sind. Diese Anordnung hat den besonderen Vorteil, dass bei jedem Messer vergleichsweise kleine Neigungswinkel α realisiert werden können, also ein ausgeprägter ziehender Schnitt zum Tragen kommt. Trotz des kleinen Neigungswinkels sind weder ein langes Messer noch ein langer Schnitthub erforderlich, weil jedes Messer nur etwa den halben Profilquerschnitt durchtrennen muss. Somit sind auch kurze Zykluszeiten und eine geringe Bruchgefahr für die Messer absehbar. Vorteilhaft ist es, wenn die Sichtflächen des Profils, also jene Flächen, welche eine besonders saubere Schnittfläche ohne Gradbildung aufweisen sollen, in Bewegungsrichtung des Messers ausgerichtet sind. In Fig. 7 wäre daher eine um 90° verdrehte Lage des Profils 10 (oder alternativ der gesamten Cuttervorrichtung 2) vorteilhaft. In diesem Fall würden die beiden Sichtflächen des Profils durch die Schneide 12 "nach innen" gedrückt, so dass am abgelängten Profil kein überstehender Grad störend in Erscheinung tritt. An der Stelle, an der die beiden Schneiden zusammenlaufen, könnte an der Schnittfläche eine kleine Stufe entstehen, wenn die beiden Messer 11 nicht ganz genau zueinander ausgerichtet sind, bzw. wenn sich diese minimal verlaufen. Das ist prinzipiell kein größeres Problem, da Fensterprofile nahezu immer auf Gehrung geschnitten werden müssen. Eine allfällige Störung der Sichtfläche durch diese Stufe wird in der gedrehten Lage des Profils ebenfalls vermieden. Somit treten auch beim Auflaminieren von Folien auf die Sichtfläche keine Komplikationen auf.

Die beiden Messer können im Spannrahmen lose nebeneinander montiert werden, wie es in der Fig. 7 dargestellt ist. Es ist nicht zweckmäßig, die Messer aus einem Stück zu fertigen, indem zuerst ein V-förmiger Einschnitt in einen rechteckigen Zuschnitt gemacht wird und dieser dann mit zwei Schneiden versehen wird. Die beiden Schneiden sind im "Bereich der Spitze" kaum mit hoher Genauigkeit zu fertigen. Geringe Symmetrieabweichungen über die Länge der Schneide fördern ein Verlaufen der Schneiden, was leicht zu einem Verbiegen der Messer führen könnte. Einmal geringfügig verbogen, würde es sehr rasch zu einem Messerbruch kommen. Durch eine Schweißnaht mit anschließendem Bündigschleifen könnten zwei getrennt gefertigte Messer bei Bedarf stabil verbunden werden.

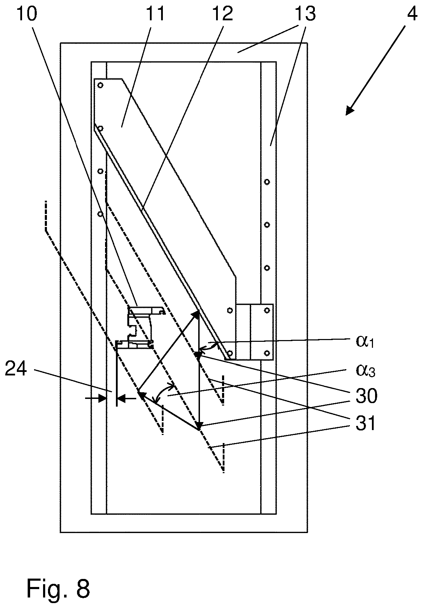

In Fig. 8 ist eine Cuttervorrichtung 2 dargestellt, bei welcher die Baugruppe 4, Spannrahmen 13 und Messer, in gewohnter Weise vertikal verschiebbar ist, siehe Doppelpfeil V, und erfindungsgemäß zusätzlich auch horizontal, siehe Doppelpfeil H. Hierfür sind die vertikale Achse 19, Antrieb und Gewindespindel, sowie die Lagerbuchsen 15 für die vertikale Achse nicht an der Grundplatte 16 befestigt, sondern an einer Zwischenplatte 26 für die Querbewegung. Der Linearantrieb für die Querbewegung, also für die horizontale Achse, ist hier nicht eingezeichnet. Dieser stützt sich an die Grundplatte 16 ab und verschiebt die Zwischenplatte 26 in horizontaler Richtung gemäß Doppelpfeil H. Das Messer 11 ist somit auf einem sogenannten Kreuzschlitten befestigt und daher in beliebige Richtungen bewegbar, wenn die vertikale und die horizontale Achse entsprechend angesteuert werden.

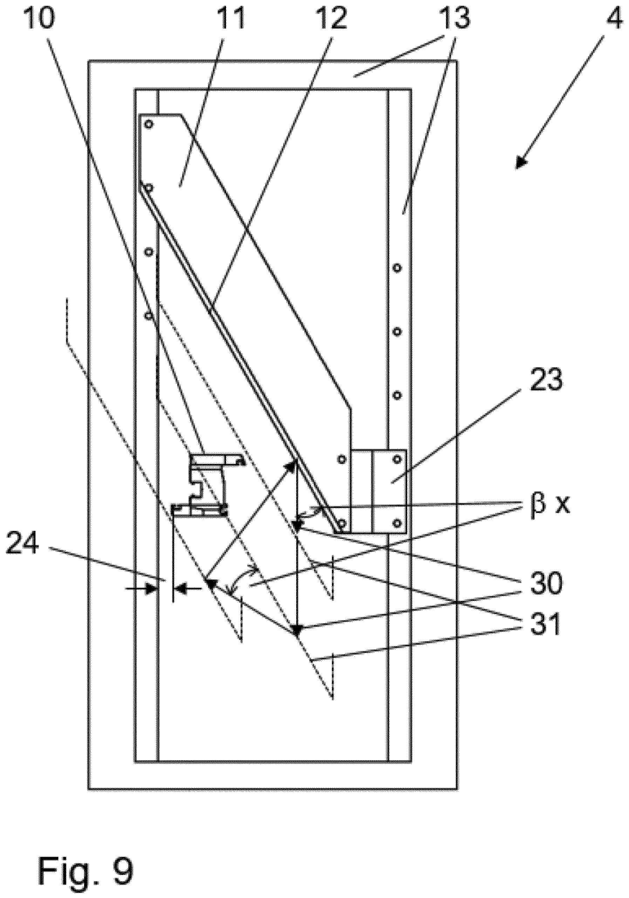

Anhand von Fig. 9 wird gezeigt, wie unterschiedliche Bewegungsrichtungen und - geschwindigkeiten des Messers 11 in Abhängigkeit von der Geometrie des Profils und der Position des Messers zum Profil vorgebbar sind. Dieser Prozess, der Lernvorgang, kann entweder direkt an der Maschine, also am Cutter, während des Rüstvorganges der Extrusionslinie erfolgen, oder anhand einer CAD-Simulation, welche die räumlichen Gegebenheiten von Cuttervorrichtung 2 und der vertikalen und horizontalen Bewegung der Baugruppe 4 von Spannrahmen 13 und Messer 11, sowie Geometrie und Lage des Profils exakt widergibt. Wird der Lernvorgang physisch am Cutter durchgeführt, dann wird ein Profilstück 10 mit knappem Abstand "vor" dem Messer (bezogen auf die Extrusionsrichtung) eingespannt. Ist der Ablauf von Arbeitshub und Rückhub einmal digital erfasst und abgespeichert, so ist dieser Prozess sehr gut reproduzierbar und kann bei jedem Produktionslos des betreffenden Profils wieder aufgerufen werden.

Ein Lernvorgang wird im Folgenden für die Bewegungen des Messers 11 in der Schnittebene, also in vertikaler und horizontaler Richtung, anhand eines nichteinschränkenden Beispiels beschrieben. Die Ausgangssituation für den Lernvorgang ist in Fig. 9 dargestellt: Der Spannrahmen 13 befindet sich relativ zur Grundplatte 16 in der obersten, "rechten" Position. Das Profil 10 liegt auf der Grundplatte 16 auf und weist eine Seitenabstand 24, hier etwa 15 mm, zum Spannrahmen 13 auf. In dieser Position ist es beim Trennvorgang fest eingespannt. Hierfür erforderliche Klemmvorrichtungen sind nicht dargestellt, um die Übersichtlichkeit zu wahren. Die relevanten Daten sind in der folgenden Tabelle 2 zusammengestellt:

| Wegpunkt Nr. | Bewegungs- abschnitt | Max. Geschwindigkeit: | 180 | mm/s | | Arbeits- und Rückhub | | | | | |
| | | Koordinaten | | Geschwindigkeit | | Weg | | | Geschwindigkeit | | |
| | | Horiz. | Vert. | relativ | absolut | Horiz. | Vert. | Strecke | Horiz. | Vert. | Zeit |
| | | mm | mm | - | mm/s | mm | mm | mm | | mm/s | s |
| 0 | | 0 | 0 | | | | | | | | |
| 1 | b1 | 0 | -80 | 100% | 180 | 0 | -80 | 80 | 0 | -180 | 0,44 |
| 2 | b2 | 0 | -191 | 50% | 90 | 0 | -111 | 111 | 0 | -90 | 1,23 |
| 3 | b3 | -99 | -132 | 40% | 72 | -99 | 59 | 115 | -62 | 37 | 1,60 |
| 4 | b4 | 0 | 0 | 90% | 162 | 99 | 132 | 165 | 97 | 130 | 1,02 |
| 5 | b5 | | | | | | | | | | |
| 6 | b6 | | | | | | | | | | |
| 7 | b7 | | | | | | | | | | |
| 8 | b8 | | | | | | | | | | |
| 9 | b9 | | | | | | | | | | |
| Gesamt | | | | | | 0 | 0 | 471 | | | 4,30 |

Tabelle 2: Daten in Zusammenhang mit dem Lernvorgang, Variante 2.

Die Ausgangsposition des Messers 11 bzw. der Schneide 12 betrifft den Wegpunkt 0 in der Tabelle 2: Vertikalposition 0 mm und Horizontalposition 0 mm. In mehrere Stufen wird nun die Baugruppe 4, Spannrahmen 13 mit Messer, durch den Bediener vertikal und horizontal verschoben, bis relevante Wegpunkte vorliegen. In diesem Beispiel sind das für den Wegpunkt 1 die Koordinaten 0/-80 mm, welche "auf Knopfdruck" automatisch in die obige Tabelle eingetragen werden. Dann wird noch die relative Geschwindigkeit, hier 100%, bezogen auf die maximale Geschwindigkeit von 180 mm/s, eingetragen. Im konkreten Fall handelt es sich bei der Bewegung vom Wegpunkt 0 bis zum Wegpunkt 1 um einen Leerhub vertikal nach unten, bis knapp vor dem Auftreffen auf das Profil 10, was hier als Bewegungsabschnitt b1 bezeichnet wird. Die strichlierten Linien betreffen die Position der Schneide 12 bei jedem Wegpunkt, ergänzt mit vertikalen Markierungen, welche die seitliche Begrenzung durch den Spannrahmen 13 bzw. das Zwischenstück 23 darstellen. Diese Markierungen sind notwendig, um eventuelle Kollisionen zwischen dem Profil und der Rahmenkonstruktion einschätzen zu können. Im gleichen Prinzip werden die Werte für die nachfolgenden Wegpunkte 3 und 4 festgelegt. Die Koordinaten des Wegpunktes 5 sind gleich wie beim Wegpunkt 0 und betreffen den Rückhub in die Ausgangslage. Dieser Rückhub wird hier als Bewegungsabschnitt b4 bezeichnet. In den weiteren Spalten der Tabelle sind Berechnungswerte für Verschiebestrecken, Horizontal- und Vertikal-Geschwindigkeiten sowie den Zeitbedarf angegeben.

Die Pfeile bei den Wegpunkten 30 in Fig. 9 stellen einerseits die Bewegungsrichtung des Messers 11 dar und kennzeichnen auch die 4 unterschiedlichen Bewegungsabschnitte b1 bis b4. Der Bewegungsabschnitt b4 ist der Rückhub in die Ausgangsposition

$\alpha_x$ stellt in Fig. 8 den Neigungswinkel des Messers 11 zur Bewegungsrichtung bei 2-achsiger Bewegung für den Wegpunkt x dar. Der Fig. 9 ist zu entnehmen, dass dieser Neigungswinkel für die Wegpunkte 2 und 3 in obiger Tabelle jeweils ca. 30° beträgt. Dieser Winkel bedeutet, dass die beiden Schnitte einem "ziehenden Schnitt" entsprechen, was ein Verlaufen des Messers 11 weitgehend verhindert und die Bruchgefahr desselbigen vermindert. Außerdem wird ein "Außengrad" an den beiden Schnittflächen verhindert, welcher vor allem beim Auflaminieren von Folien zu Störungen führen würde.

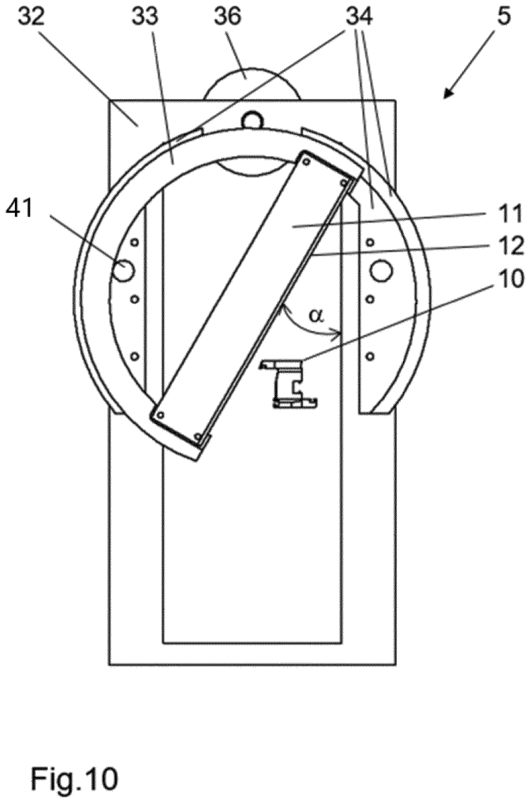

Fig. 10 zeigt nicht einschränkend eine erfindungsgemäße Baugruppe 5, Spannrahmen mit winkelverstellbarem Messer, in einer Ansicht in Extrusionsrichtung. Diese Baugruppe kann anstelle der Baugruppe 4, Spannrahmen 13 mit Messer, bei welchem das Messer "nur" in baulich festgelegten Winkelpositionen montiert werden kann, in der Cuttervorrichtung verwendet werden. Der Vertikalrahmen 32 wird anstelle des bisher beschriebenen vertikal verschiebbaren Spannrahmens 13 eingesetzt. 2 Lagersegmente 34, verschraubt mit dem Vertikalrahmen 32, nehmen den Ringsegment-Spannrahmen 33 auf, in dem das Messer 11 eingespannt ist. Eine Nut am Außenumfang des Ringsegment-Spannrahmens 33 arbeitet mit einem Steg der Lagersegmente 34 zusammen, so dass ersterer in der Ebene drehbar ist. Die Schneide 12 kann dabei ausgehend von der Vertikalen prinzipiell um 360° verdreht werden, vorzugsweise deckt der Neigungswinkel $\alpha$ den Bereich von -30° bis +30° ab, was einem Verdrehbereich von 120° entspricht. In der einfachsten Ausführungsform wird ein gewünschter Winkel per Hand eingestellt und der Ringsegment-Spannrahmen 33 in dieser Lage fixiert. Mit dem Sicherungsbolzen 41 wird verhindert, dass der Ringsegment-Spannrahmen 33 aus dem Lagersegment 34 herausrutschen kann, wenn das Messer nahezu vertikal ausgerichtet ist.

Vorteilhaft ist es, wenn der Ringsegment-Spannrahmen 33 mit einem elektrischen Drehantrieb 35 verstellt werden kann, wobei ein Zahnritzel des Drehantriebs 35 mit einem Zahnradsegment am Außenumfang des Ringsegment-Spannrahmens zusammenwirkt. Dieses Verdrehen kann aber auch auf andere Weise realisiert werden, z.B. einem Schneckenantrieb. Gewünschte Winkel $\beta$ können somit in der Steuerung als Parameter hinterlegt werden und dadurch bei jedem Rüstvorgang der Extrusionslinie "automatisch" auf das aktuelle Profil 10 eingestellt werden. Im Falle eines elektrischen Drehantriebes 35 kann der Winkel $\beta$ auch synchron mit der Vertikalbewegung V des Spannrahmens und der Horizontalbewegung H der Zwischenplatte angesteuert werden, so dass auch bei komplizierten Profilen nahezu keine Einschränkungen hinsichtlich der optimalen Schnittführung vorliegen.

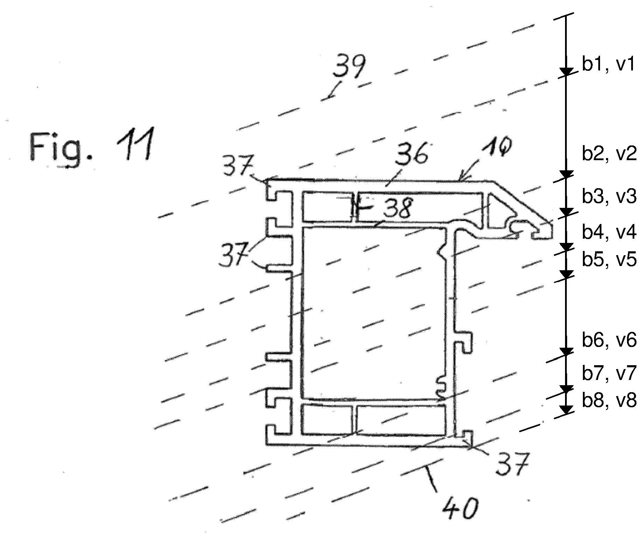

In der Fig. 11 ist ein Rahmenprofil 10 mit den zugehörigen Bewegungsabschnitten b1 bis b8 dargestellt. Jedem Bewegungsabschnitt b1 bis b8 ist eine entsprechende Geschwindigkeit v1 bis v8 zugeordnet, mit der das Messer 11 nach unten bewegt wird. Der Bewegungsabschnitt b1 des Messers 11 betrifft die Bewegung des Messers von der Ausgangsposition bis zur Berührung mit dem Profilabschnitt 10 und stellt einen Leerhub dar.

Die unterbrochenen Linien 39 bzw. 40 stellen den Anfangszustand bzw. den Endzustand der Schneide 12 des Messers 11 dar.

Im vorliegenden Fall wird die Geschwindigkeit v1 100% betragen, also die maximal mögliche Geschwindigkeit sein. Im zweiten Bewegungsabschnitt b2 beträgt die Geschwindigkeit v2 beispielsweise 55%, weil neben dickwandigen Abschnitte 36 auch Extremitäten 37 und dünnwandige Stege 38 zu durchtrennen sind. Im dritten Bewegungsabschnitt b3 sind weniger kritische Teile des Profils betroffen, so dass die Geschwindigkeit v3 etwa 85% betragen kann. In den weiteren Bewegungsabschnitten b4 und b6 liegen wiederum kritischere Verhältnisse vor, die Geschwindigkeiten v4 und v6 von 40% bedingen. Im Bewegungsabschnitt b5 sind wiederum weniger kritische Teile betroffen, so dass die Geschwindigkeit v5 etwa 90% betragen kann. Ähnliches gilt für die Geschwindigkeit v7 im Bewegungsabschnitt b7. Im letzten Bewegungsabschnitt b8 kann eine mittlere Geschwindigkeit v8 von etwa 80% angesetzt werden, da nur eine relativ robuste Extremität zu berücksichtigen ist. Der Bewegungsabschnitt b9 zur Bewegung des Messers vom Endzustand zum Anfangszustand ist in der Fig. 11 nicht dargestellt und erfolgt mit der Geschwindigkeit v9.

Die vorliegende Erfindung ermöglicht es, die Geschwindigkeit des Abtrennens von Profilabschnitten zu optimieren.

Bezugszeichenliste

1 Cutteranlage zur Abtrennung von Profilabschnitten in Extrusionslinien
2 Cuttervorrichtung
3 Raupenabzug
4 Baugruppe Spannrahmen mit Messer
5 Baugruppe Spannrahmen mit winkelverstellbarem Messer

10 Profilstrang
11 Messer
12 Schneide des Messers

13      Spannrahmen, vertikal verschiebbar
14      Holm für vertikale Achse
15      Lagerbuchse für vertikale Achse
16      Grundplatte mit Auflagefläche für das Profil (= Längsschlitten)
17      Holm für Längsbewegung der Cuttervorrichtung
18      Lagerbuchse für Längsbewegung der Cuttervorrichtung
19      Vertikale Achse, Antrieb und Gewindespindel
20      Mutter für vertikale Achse
21      Befestigungspunkte für Messer
22      Schnittfenster
23      Zwischenstück für Befestigung unterschiedlicher Messer
24      Referenzabstand Profil - Spannrahmen
25      Lage der Schneide 12 bei reiner vertikaler Bewegung
26      Zwischenplatte für Querbewegung
27      Lagerbuchse für Querbewegung
28      Holm für Querbewegung
29      Abstützung für die vertikale Achse
30      Wegpunkt x, für Charakterisierung von Position und Bewegungsrichtung des Messers
31      Lage der Schneide 12 bei 2-achsiger Bewegung
32      Vertikalrahmen
33      Ringsegment-Spannrahmen für das Messer
34      Lagersegment
35      Drehantrieb mit Zahnritzel
36      dickwandige Abschnitte
37      Extremitäten
38      dünnwandige Stege
39      unterbrochenen Linien (Anfangszustand)
40      unterbrochenen Linien (Endzustand)
41      Sicherungsbolzen

E       Extrusionsrichtung
C       Längsbewegung der Cuttervorrichtung
M       Bewegungsrichtung des Messers
α       Neigungswinkel des Messers zur Bewegungsrichtung
β       Neigungswinkel des Messers zur Vertikalen
b       Bewegungsabschnitt
x       Index zur Charakterisierung von Bewegungsabschnitt, Position und Bewegungsgeschwindigkeit des Messers
V       Vertikalbewegung des Spannrahmens
H       Horizontalbewegung der Zwischenplatte

**Patentansprüche**

**1.** Verfahren zur Abtrennung von Profilabschnitten in Extrusionslinien, bei dem während des laufenden Extrusionsprozesses ein Schlitten (2) in einer stromaufwärtigen Stellung mit dem kalibrierten Profilstrang (10) gekoppelt wird, um sich mit dem Profilstrang (10) mitzubewegen, wobei in dem gekoppelten Zustand ein in einem Spannrahmen (13, 33) angeordnetes Messer (11) aus einem Anfangszustand (39) quer zur Extrusionsrichtung in einen Endzustand (40) bewegt wird, um einen Profilabschnitt vom Profilstrang (10) abzutrennen, danach das Messer (11) in den Anfangszustand (39) zurückbewegt wird, wonach der Schlitten (2) vom Profilstrang (10) abgekoppelt wird und wieder den stromaufwärtigen Zustand zurückbewegt wird, **dadurch gekennzeichnet, dass** angesteuert über eine Steuerungsvorrichtung die Bewegung des Messers (11) vom Anfangszustand (39) in den Endzustand (40) mit bereichsweise unterschiedlichen Geschwindigkeiten ($v_1$ bis $v_9$) durchgeführt wird und dass die Bewegung des Messers (11) in Bewegungsabschnitten ($b_1$ bis $b_7$), in denen fragile Bereiche des Profilstrangs (10) durchtrennt werden, langsamer erfolgt als in Bewegungsabschnitten ($b_1$ bis $b_7$), bei denen dies nicht der Fall ist.

**2.** Verfahren nach Anspruch 1, **dadurch gekennzeichnet, dass** die Bewegung des Messers (11) aus einer Hauptbewegung und einer Querbewegung in unterschiedlicher Richtung, in der Messerebene und vorzugsweise in einem Winkel von 90° zur Hauptbewegung, zusammengesetzt ist.

3. Verfahren nach einem der Ansprüche 1 oder 2, **dadurch gekennzeichnet, dass** das Messer (11) auf einem verdrehbaren Spannrahmen (33) montiert ist, wobei der Neigungswinkel der Schneide vorzugsweise mechanisch im Stillstand der Cuttervorrichtung fixiert oder mit einer elektronisch ansteuerbaren Achse während des Betriebes der Cutteranlage verstellt werden kann.

4. Verfahren nach einem der Ansprüche 1 bis 3, **dadurch gekennzeichnet, dass** vor dem Beginn des Extrusionsprozesses ein Lernzyklus durchlaufen wird, bei dem die Bewegung des Messers (11) vom Anfangszustand (39) in den Endzustand (40) mit verringerter Geschwindigkeit simuliert wird, um die einzelnen Bewegungsabschnitte ($b_1$ bis $b_{max}$), die jeweilige Geschwindigkeiten ($v_1$ bis $v_{max}$) und gegebenenfalls Bewegungsrichtungen (M) des Messers (11) in der Maschinensteuerung hinterlegen zu können.

5. Verfahren nach einem der Ansprüche 1 bis 4, **dadurch gekennzeichnet, dass** das Messer (11) jeweils zwischen zwei Schneidvorgängen erwärmt wird, wobei vorzugsweise eine Temperatur zwischen 50°C und 300°C erreicht wird.

6. Verfahren nach einem der Ansprüche 1 bis 5, **dadurch gekennzeichnet, dass** das Messer (11) fallweise zwischen zwei Schneidvorgängen mit einem Trennmittel besprüht wird, so dass die Reibung und die Schnittkraft verringert werden und/oder dass das Messer (11) mit einer Hartbeschichtung, vorzugsweise aus TiN, versehen ist, um den Verschleiß zu verringern.

7. Vorrichtung zur Abtrennung von Profilabschnitten in Extrusionslinien, bei der während des laufenden Extrusionsprozesses die in Extrusionsrichtung verschiebbare Cuttervorrichtung (2) in einer stromaufwärtigen Position mit dem kalibrierten Profilstrang (10) zeitweilig gekoppelt wird, um sich mit dem Profilstrang (10) mitzubewegen, mit einem in einem verschiebbaren Spannrahmen (13) angeordnetem Messer (11), **dadurch gekennzeichnet, dass** eine Steuerungsvorrichtung vorgesehen ist, die dazu eingerichtet ist, die Bewegung des Messers (11) vom Anfangszustand (39) in den Endzustand (40) in einzelnen Bewegungsabschnitten ($b_1$ bis $b_{max}$) mit bereichsweise unterschiedlichen Geschwindigkeiten ($v_1$ bis $v_{max}$) zu steuern, so dass die Bewegung des Messers (11) in Bewegungsabschnitten ($b_1$ bis $b_7$), in denen fragile Bereiche des Profilstrangs (10) durchtrennt werden, langsamer erfolgt als in Bewegungsabschnitten ($b_1$ bis $b_7$), bei denen dies nicht der Fall ist.

8. Vorrichtung nach Anspruch 7, **dadurch gekennzeichnet, dass** eine erste Führung (14) für die Bewegung des Messers (11) in einer Hauptbewegungsrichtung und eine weitere Führung (28) für eine Bewegung des Messers (11) quer dazu, vorzugsweise rechtwinkelig auf die erste Führung (5), vorgesehen ist.

9. Vorrichtung nach einem der Ansprüche 7 oder 8, **dadurch gekennzeichnet, dass** das Messer (11) in einem verdrehbaren Spannrahmen (33) angeordnet ist, wobei der Neigungswinkel der Schneide vorzugsweise mechanisch im Stillstand der Cuttervorrichtung fixiert oder mit einer elektronisch ansteuerbaren Achse während des Betriebes der Cutteranlage verstellt werden kann.

10. Vorrichtung nach einem der Ansprüche 7 bis 9, **dadurch gekennzeichnet, dass** die Steuerungsvorrichtung die Festlegung von mehreren Bewegungsabschnitten ($b_1$ bis $b_{max}$), mit jeweils vorbestimmten Geschwindigkeiten ($v_1$ bis $v_{max}$) und gegebenenfalls Bewegungsrichtungen (M) des Messers (11) vorsieht, so dass bei jedem Schnittvorgang das Messer die gleiche Bewegung ausführt.

11. Vorrichtung nach einem der Ansprüche 7 bis 10, **dadurch gekennzeichnet, dass** das Messer (11) eine Schneide (12) aufweist, die mit der Bewegungsrichtung (7) des Messers (11) vom Anfangszustand (39) in den Endzustand (40) einen Winkel ($\alpha$) einschließt, der kleiner ist als 60°, vorzugsweise kleiner als 45°, besonders bevorzugt kleiner als 30°, ist.

12. Vorrichtung nach einem der Ansprüche 7 bis 11, **dadurch gekennzeichnet, dass** das Messer (11) eine Schneide (12) aufweist, die mit der Bewegungsrichtung (7) des Messers (11) vom Anfangszustand (39) in den Endzustand (40) einen veränderlichen Winkel ($\alpha$) einschließt.

13. Vorrichtung nach einem der Ansprüche 7 bis 12, **dadurch gekennzeichnet, dass** das Messer (11) in Richtung der Schneide (12) vorgespannt ist.

14. Vorrichtung nach einem der Ansprüche 7 bis 13, **dadurch gekennzeichnet, dass** zwei Messer (11) vorgesehen sind, deren Schneiden (12) V-förmig konkav angeordnet sind.

**EP 3 685 984 B1**

**Claims**

1. Method for separating profile sections in extrusion lines, in which, during the ongoing extrusion process, a carriage (2) is coupled in an upstream position to the calibrated profile strand (10) in order to move along with the profile strand (10), wherein, in the coupled state, a blade (11) arranged in a clamping frame (13, 33) is moved from an initial state (39) transversely to the extrusion direction into an end state (40) in order to sever a profile section from the profile strand (10), after which the blade (11) is moved back to the initial state (39), whereupon the carriage (2) is uncoupled from the profile strand (10) and the carriage (2) is moved back to the upstream state, **characterised in that** the movement of the blade (11) from the initial state (39) to the final state (40) is carried out controlled via a control device at speeds ($v_1$ to $v_9$) which differ from region to region, and **in that** the movement of the blade (11) is slower in movement sections ($b_1$ to $b_7$) in which fragile regions of the profile strand (10) are severed than in movement sections ($b_1$ to $b_7$) in which this is not the case.

2. Method according to claim 1, **characterised in that** the movement of the blade (11) is composed of a main movement and a transverse movement in different directions, in the plane of the blade and preferably at an angle of 90° to the main movement.

3. Method according to one of claims 1 or 2, **characterised in that** the blade (11) is mounted on a rotatable clamping frame (33), wherein the angle of inclination of the cutting edge can preferably be fixed mechanically when the cutter device is stationary or can be adjusted by means of an electronically controllable axis during operation of the cutter system.

4. Method according to one of claims 1 to 3, **characterised in that** a learning cycle is run through before the beginning of the extrusion process, in which the movement of the blade (11) from the initial state (39) to the final state (40) is simulated at a reduced speed, in order to be able to store the individual movement sections ($b_1$ to $b_{max}$), the respective speeds ($v_1$ to $V_{max}$) and, optionally, movement directions (M) of the blade (11) in the machine control system.

5. Method according to one of claims 1 to 4, **characterised in that** the blade (11) is heated between each two cutting processes, wherein a temperature between 50°C and 300°C is preferably reached.

6. Method according to one of the claims 1 to 5, **characterised in that** the blade (11) is occasionally sprayed with a release agent between two cutting operations in order to reduce the friction and the cutting force, and/or **in that** the blade (11) is provided with a hard coating, preferably of TiN, in order to reduce wear.

7. Device for separating profile sections in extrusion lines, in which, during the ongoing extrusion process, the cutter device (2), which is displaceable in the extrusion direction, is temporarily coupled in an upstream position to the calibrated profile strand (10) in order to move together with the profile strand (10), having a blade (11) arranged in a displaceable clamping frame (13), **characterised in that** a control device is provided which is set up to control the movement of the blade (11) from the initial state (39) into the final state (40) in individual movement sections ($b_1$ to $b_{max}$) at speeds ($v_1$ to $v_{max}$) that differ from region to region, so that the movement of the blade (11) is slower in movement sections ($b_1$ to $b_7$) in which fragile regions of the profile strand (10) are severed than in movement sections ($b_1$ to $b_7$) in which this is not the case.

8. Device according to claim 7, **characterised in that** a first guide (14) is provided for the movement of the blade (11) in a main direction of movement and a further guide (28) is provided for a movement of the blade (11) transversely thereto, preferably at right angles to the first guide (5).

9. Device according to one of claims 7 or 8, **characterised in that** the blade (11) is arranged in a rotatable clamping frame (33), wherein the angle of inclination of the cutting edge is preferably fixed mechanically when the cutter device is stationary or can be adjusted with an electronically controllable axis during operation of the cutter system.

10. Device according to one of the claims 7 to 9, **characterised in that** the control device provides for the determination of multiple movement sections ($b_1$ to $b_{max}$), each with predetermined speeds ($v_1$ to $v_{max}$) and, optionally, directions of movement (M) of the blade (11), so that the blade performs the same movement in each cutting process.

11. Device according to one of claims 7 to 10, **characterised in that** the blade (11) has a cutting edge (12) which, with the direction of movement (7) of the blade (11) from the initial state (39) into the final state (40), encloses an angle ($\alpha$) which is smaller than 60°, preferably smaller than 45°, particularly preferably smaller than 30°.

12. Device according to one of claims 7 to 11, **characterised in that** the blade (11) has a cutting edge (12) which forms a variable angle ($\alpha$) with the direction of movement (7) of the blade (11) from the initial state (39) to the final state (40).

13. Device according to one of claims 7 to 12, **characterised in that** the blade (11) is pretensioned in the direction of the cutting edge (12).

14. Device according to one of claims 7 to 13, **characterised in that** two blades (11) are provided whose cutting edges (12) are arranged in a V-shaped concave manner.

**Revendications**

1. Procédé de coupe de segments de profilé sur des lignes d'extrusion selon lequel, pendant le fonctionnement du procédé d'extrusion, on couple un chariot (2) dans une position amont, au cordon de profilé calibré (10) pour être entraîné avec le cordon de profilé (10),

   - à l'état couplé, un couteau (11) installé dans une monture (13, 33) est déplacé transversalement à la direction d'extrusion à partir d'un état initial (39) dans un état final (40) pour couper le segment de profilé du cordon de profilé (10) puis le couteau (11) est remis à l'état initial (39),
   - puis on découple le chariot (2) du cordon profilé (10) et on revient à l'état amont,
   procédé **caractérisé en ce que**
   on commande par un dispositif de commande, le mouvement du couteau (11) à partir de l'état initial (39) à l'état final (40) avec des vitesses différentes par zone ($v_1$-$v_9$) et dans les segments de mouvement ($b_1$-$b_7$) dans lesquels il coupe des zones fragiles du cordon profilé (10) le mouvement du couteau (11) est plus lent que dans les segments de mouvement ($b_1$-$b_7$) dans lesquels cela n'est pas le cas.

2. Procédé selon la revendication 1,
   **caractérisé en ce que**
   le mouvement du couteau (11) se compose d'un mouvement principal et d'un mouvement transversal dans une direction différente, dans laquelle le plan du couteau est de préférence à un angle de 90° par rapport au mouvement principal.

3. Procédé selon l'une des revendications 1 ou 2,
   **caractérisé en ce que**
   le couteau (11) est installé sur une monture (33) rotative,

   - l'angle d'inclinaison de l'arête de coupe est fixé de préférence mécaniquement à l'arrêt du dispositif de coupe ou de préférence selon un axe commandé électroniquement pendant le fonctionnement de l'installation de coupe.

4. Procédé selon l'une quelconque des revendications 1 à 3,
   **caractérisé en ce que**
   avant le début du processus d'extrusion, on effectue un cycle d'apprentissage selon lequel on simule le mouvement du couteau (11) de l'état initial (39) vers l'état final (40) avec une vitesse diminuée pour enregistrer pour les différents segments de mouvement ($b_1$-$b_{max}$), la vitesse respective ($v_1$ jusqu'à $v_{max}$) et le cas échéant les directions de mouvement (M) du couteau (11) dans la commande de la machine.

5. Procédé selon l'une des revendications 1 à 4,
   **caractérisé en ce que**
   le couteau (11) est respectivement chauffé entre deux opérations de coupe, et de préférence, à une température comprise entre 50°C et 300°C.

6. Procédé selon l'une des revendications 1 à 5,
   **caractérisé en ce que**
   on pulvérise sur le couteau (11) le cas échéant entre deux opérations de coupe, un agent de coupe de façon à diminuer le frottement et la force de coupe et/ou on muni le couteau (11) d'un revêtement dur de préférence en TiN pour réduire l'usure.

7. Procédé de coupe de segments de profilé dans les lignes d'extrusion selon lequel, pendant le fonctionnement du processus d'extrusion, on couple le dispositif de coupe (2) coulissant dans la direction d'extrusion, dans une position en amont avec le cordon de profilé calibré (10), de temps en temps pour se déplacer avec le cordon profilé (10), et comportant un couteau (11) installé sur une monture porte-couteau (11), coulissant dans la direction de coulissement (13),

dispositif **caractérisé en ce qu'**il comprend :

- un dispositif de commande pour commander le mouvement du couteau (11) entre son état initial (39) et son état final (40) selon des segments de mouvement distincts ($b_1$-$b_{max}$) avec des vitesses différentes par zones ($v_1$-$v_{max}$) pour que le mouvement du couteau (11) dans les segments de mouvement ($b_1$-$b_7$) dans lesquels on coupe des zones fragiles du cordon de profilé (10), se fasse plus lentement que dans les segments de mouvement ($b_1$-$b_7$) dans lesquels cela n'est pas le cas.

8.  Dispositif selon la revendication 7,
    **caractérisé par**
    un premier guide (14) pour le mouvement du couteau (11) dans la direction principale de mouvement et un autre guide (28) pour un mouvement du couteau (11) transversalement à celle-ci et de préférence à angle droit par rapport au premier guide (5).

9.  Dispositif selon l'une des revendications 7 ou 8,
    **caractérisé en ce que**
    le couteau (11) est installé dans une monture (33) rotative, l'angle d'inclinaison du couteau étant de préférence fixé mécaniquement à l'arrêt du dispositif de cutter ou se règle autour d'un axe à commande électronique pendant le fonctionnement de l'installation de cutter.

10. Dispositif selon l'une des revendications 7 à 9,
    **caractérisé en ce que**
    le dispositif de commande fixe plusieurs segments de mouvement ($b_1$-$b_{max}$) avec chaque fois une vitesse différente ($v_1$-$v_{max}$) et le cas échéant prévoie d'autres directions de mouvement (M) du couteau (11) de façon que le couteau effectue le même mouvement à chaque coupe.

11. Dispositif selon l'une des revendications 7 à 10,
    **caractérisé en ce que**
    le couteau (11) a une arête de coupe (12) qui fait un angle ($\alpha$) par rapport à la direction de mouvement (7) du couteau (11) de l'état initial (39) et l'état final (40), cet angle étant inférieur à 60°, de préférence inférieur à 45° et d'une manière particulièrement préférentielle inférieur à 30°.

12. Dispositif selon l'une des revendications 7 à 11,
    **caractérisé en ce que**
    le couteau (11) a une arête de coupe (12) qui a un angle variable ($\alpha$) avec la direction de mouvements (7) du couteau (11), entre l'état initial (39) et l'état final (40).

13. Dispositif selon l'une des revendications 7 à 12,
    **caractérisé en ce que**
    le couteau (11) est précontraint en direction de l'arête de coupe (12).

14. Dispositif selon l'une des revendications 7 à 13,
    **caractérisé en ce qu'**il comprend
    deux couteaux (11) dont les arêtes de coupe (12) sont installées en forme de V concave.

Fig. 1

Fig. 2

Fig. 3

Fig. 4

Fig. 5

Fig. 6

Fig. 7

Fig. 8

Fig. 9

Fig.10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018219477 A

- WO 2005087420 A